# EUROPÄISCHE PATENTSCHRIFT

(11) **EP 3 150 048 B1**
(45) Veröffentlichungstag und Bekanntmachung des Hinweises auf die Patenterteilung: **04.12.2019**
(21) Anmeldenummer: 16177712.3
(22) Anmeldetag: 04.07.2016
(51) Int. Cl.: A01D 41/127

(54) **VERFAHREN ZUR KALIBRIERUNG BEI EINER LANDWIRTSCHAFTLICHEN ERNTEMASCHINE**
METHOD FOR CALIBRATING FOR AGRICULTURAL HARVESTER
PROCEDE DE CALIBRAGE D'UNE MOISSONNEUSE AGRICOLE

(30) Priorität: 02.10.2015 DE 102015116737
(43) Veröffentlichungstag der Anmeldung: 05.04.2017
(73) Patentinhaber: CLAAS Selbstfahrende Erntemaschinen GmbH, 33428 Harsewinkel (DE)
(72) Erfinder: Schröder, Axel, 33330 Gütersloh (DE); Neu, Sebastian, 49196 Bad Laer (DE); Kohlhase, Dr., Martin, 33428 Harsewinkel (DE)
(74) Vertreter: CLAAS Gruppe

(56) Entgegenhaltungen:
- EP-A1- 1 518 452
- EP-A2- 0 303 899
- DE-A1- 4 323 305

## Beschreibung

Die Erfindung betrifft ein Verfahren zur Kalibrierung bei einer landwirtschaftlichen Erntemaschine mit den Merkmalen des Oberbegriffs von Anspruch 1.

Für das wirtschaftliche Management von Erntemaschinen ist es zunehmend wichtig, eine kontinuierliche und möglichst genaue Angabe über den Füllstand speziell im Korntank machen zu können. Regelmäßig weist ein solcher Korntank Sensoren auf, welche lediglich das Erreichen von einigen wenigen vordefinierten und diskreten Füllstandmarken erfassen (z. B. 70 % des Maximums, 30 % des Maximums). Um hier eine kontinuierliche Angabe machen zu können, wird ein auf diese Weise gemessener Füllstand durch den von anderen Sensoren ermittelten Volumenstrom einer Erntegutbefüllung und ggf. durch den ermittelten oder angesetzten Volumenstrom einer Erntegutentleerung korrigiert.

Problematisch dabei ist, dass die Ermittlung des Volumenstroms einer Erntegutbefüllung oder -entleerung regelmäßig sehr ungenau ist, da eine Kalibrierung der entsprechenden Sensoren wegen sich verändernder Umgebungsparameter viel häufiger erfolgen müsste, als es bislang die Regel ist, also öfter als etwa nur einmal täglich. Problematisch ist auch, dass die Notwendigkeit der Kalibrierung für den Benutzer nicht ohne Weiteres erkennbar ist. Im Ergebnis ist die ermittelte kontinuierliche Angabe des Füllstands für ein wünschenswert effizientes Management der Erntemaschinen zu ungenau.

Die aus dem Stand der Technik bekannte EP 0 303 899 A2, von der die vorliegende Erfindung ausgeht, versucht dabei die Genauigkeit zu erhöhen, indem ein als genau angesetzter Füllstand des Korntanks mit bekannten Parametern der Erntefläche und des Ernteguts in Bezug gesetzt wird. Nachteilig an diesem Ansatz ist insbesondere, dass keinerlei Möglichkeit zur Kalibrierung im laufenden Betrieb besteht.

Aus der WO 2011/104085 A1 ist eine Erntemaschine bekannt, wobei ein Kalibrierungsfaktor für einen Durchflussmesser bestimmt wird durch Integrieren der Flussrate ab dem Zeitpunkt, ab dem der Füllstand ein vorbestimmtes unteres Niveau erreicht, bis zum Zeitpunkt, an dem der Füllstand das vorbestimmte hohe Niveau erreicht; und wobei das Volumen beim vorbestimmten hohen Niveau das Korntankvolumen ist, das zwischen dem vorbestimmten hohen Niveau und dem vorbestimmten niedrigen Niveau beinhaltet ist.

Ausgehend von diesem Stand der Technik besteht das Problem der Erfindung also darin, bei einer landwirtschaftlichen Erntemaschine eine Kalibrierung im und gleichsam neben dem laufenden Betrieb durchzuführen.

Bezogen auf ein Verfahren zur Kalibrierung bei einer landwirtschaftlichen Erntemaschine mit den Merkmalen des Oberbegriffs von Anspruch 1 wird diese Aufgabe durch die Merkmale des kennzeichnenden Teils von Anspruch 1 gelöst.

Wesentlich für die Erfindung ist die Erkenntnis, dass bereits die mögliche Erfassung von zwei unterschiedlichen Füllständen in einem Korntank dazu ausreicht, einen Sensor für den Volumenstrom eines Erntegutstroms zu kalibrieren. Insbesondere wenn der Volumenunterschied zwischen den beiden erfassbaren Füllständen vorbekannt oder anderweitig bestimmbar ist, kann der gemessene Verlauf des Volumenstroms mit der Zeit zwischen der Erfassung der beiden Füllstände in Beziehung gesetzt werden. Das gilt gleichermaßen für einen Volumenstrom der Befüllung wie der Entleerung. Besonders vorteilhaft ist, dass diese Kalibrierung prinzipiell bei jedem Wechsel des Füllstands im Korntank zwischen den beiden Füllständen und damit nebenbei im laufenden Betrieb vorgenommen werden kann. Diese Kalibrierung der Messung des Volumenstroms an Erntegut kann dann unmittelbar für die kontinuierliche Füllstandanzeige zur Verbesserung der Genauigkeit eingesetzt werden.

Die bevorzugten Ausgestaltungen der Unteransprüche 2 und 3 betreffen jeweils die Kalibrierung der Messung eines Befüll- und eines Entleererntegutstroms.

Gemäß den Unteransprüchen 4 und 5 erfolgt die Kalibrierung basierend auf einem Differenzvolumen zwischen den Füllständen bzw. auf einer Zeitdifferenz zwischen ihrer Erfassung, wobei auch ein Quotient zwischen diesen Größen gebildet werden kann.

Die bevorzugten Ausgestaltungen der Unteransprüche 6 bis 12 betreffen bevorzugte Ausgestaltungen der Sensoren zum Erfassen der Füllstände in dem Korntank sowie derjenigen Füllstandwerte oder -bereiche, die vorteilhafterweise von diesen erfasst werden.

Schließlich betreffen die Unteransprüche 13 und 14 die vorteilhafte Anwendung der Kalibrierung bei der Messung eines Volumenstroms an Erntegut bei der Kalibrierung der vorzugsweise kontinuierlichen Füllstandanzeige.

Weitere Einzelheiten, Merkmale, Ziele und Vorteile der vorliegenden Erfindung werden nachfolgend anhand der Zeichnung eines bevorzugten Ausführungsbeispiels erläutert. In der Zeichnung zeigt
- Fig. 1: eine schematische Ansicht eines Mähdreschers mit einer Gutstromsensoranordnung zur Ausführung des vorschlagsgemäßen Verfahrens und
- Fig. 2: eine Prinzipdarstellung der Funktionsweise der Sensoren des Mähdreschers der Fig. 1.

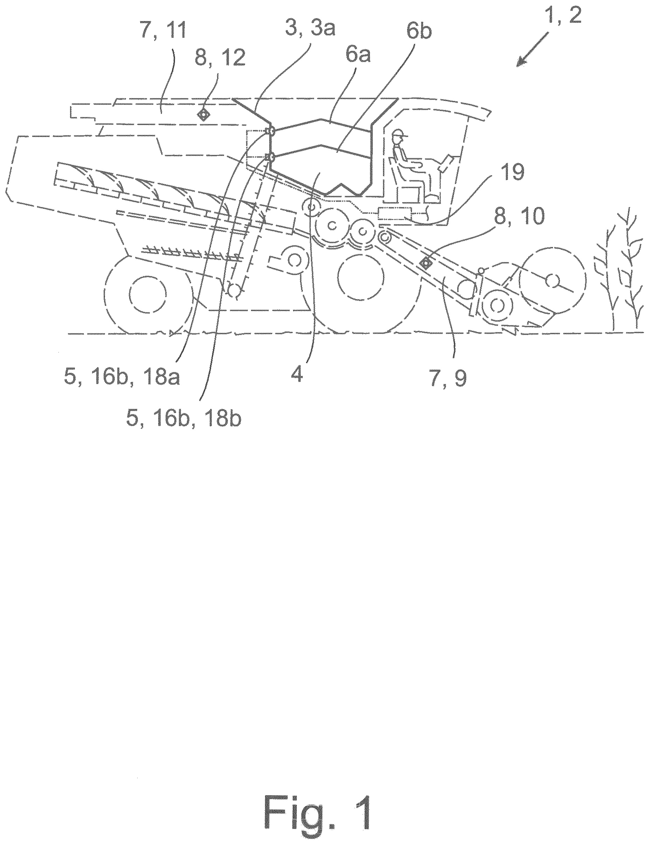

Das vorschlagsgemäße Verfahren dient der Kalibrierung bei einer landwirtschaftlichen Erntemaschine 1, bei welcher es sich hier im dargestellten Ausführungsbeispiel um einen Mähdrescher 2 handelt. Dieser Mähdrescher 2 ist in der Fig. 1 dargestellt und weist grundsätzlich die an sich aus dem Stand der Technik bekannten Bestandteile auf, auf welche vorliegend nur insoweit ausdrücklich eingegangen wird, wie sie für den Vorschlag bedeutsam sind.

Gemäß dem vorschlagsgemäßen Verfahren, bei dessen Beschreibung zunächst auf die Fig. 1 Bezug genommen wird, weist die Erntemaschine 1 einen Behälter 3 - hier einen Korntank 3a - zur Aufnahme von Erntegut 4, eine Füllstandsensoranordnung 5 zum Erfassen eines oberen Füllstands 6a und eines unteren Füllstands 6b in dem Behälter 3, eine Transportanordnung 7 zum Führen eines dem Behälter 3 zugeordneten Erntegutstroms und eine Gutstromsensoranordnung 8 zum Messen eines Volumens des Erntegutstroms auf. Da es sich bei dem Erntegutstrom um einen Strom handelt, betrifft die Messung der Gutstromsensoranordnung ein Volumen an Erntegut pro Zeiteinheit. Es könnte also noch genauer auch gesagt werden, dass die Gutstromsensoranordnung dem Messen eines Volumenstroms an Erntegut dient. Diese Feststellung dient sinngemäß gleich auch für nachfolgende Beschreibungen der Messung eines Volumens eines Gutstroms.

Das erfindungsgemäße Verfahren ist dadurch gekennzeichnet, dass die Gutstromsensoranordnung 8 basierend auf der Erfassung des oberen Füllstands 6a und des unteren Füllstands 6b kalibriert wird. Die Kalibrierung beruht also darauf, dass sowohl das Erreichen des oberen Füllstands 6a als auch das Erreichen des unteren Füllstands 6b von der Füllstandsensoranordnung 5 erfasst wurde. Da der obere Füllstand 6a von dem unteren Füllstand 6b verschieden ist, fand diese Erfassung zu einem jeweils unterschiedlichen Zeitpunkt statt.

Der dem Behälter 3 zugeordnete Erntegutstrom kann einen Erntegutstrom in den Behälter 3 hinein umfassen. Entsprechend ist es bevorzugt, dass die Transportanordnung 7 eine Befüllvorrichtung 9 zum Zuführen eines Befüllerntegutstroms in den Behälter 3 umfasst und dass die Gutstromsensoranordnung 8 eine Befüllstromsensorvorrichtung 10 zum Messen eines Volumens des Befüllerntegutstroms umfasst. Bei der Befüllvorrichtung 9 handelt es sich vorliegend und insoweit nur beispielhaft um den Schrägförderer des Mähdreschers 2. Es könnte sich aber auch um einen beliebige andere Vorrichtung des Mähdreschers zum Transport des Ernteguts vom Feld in den Behälter 3 handeln. Hier ist es weiter bevorzugt, dass die Befüllstromsensorvorrichtung 10 basierend auf der Erfassung des oberen Füllstands 6a und des unteren Füllstands 6b kalibriert wird.

Es kann aber auch der dem Behälter 3 zugeordnete Erntegutstrom einen Erntegutstrom aus dem Behälter 3 hinaus umfassen. Dementsprechend ist es bevorzugt, dass die Transportanordnung 7 eine Entleervorrichtung 11 - bei welcher es sich vorliegend und beispielhaft um ein Abtankrohr handelt - zum Abführen eines Entleererntegutstroms aus dem Behälter 3 umfasst und dass die Gutstromsensoranordnung 8 eine Entleerstromsensorvorrichtung 12 zum Messen eines Volumens des Entleererntegutstroms umfasst. Bevorzugt ist hier entsprechend, dass die Entleerstromsensorvorrichtung 12 basierend auf der Erfassung des oberen Füllstands 6a und des unteren Füllstands 6b kalibriert wird.

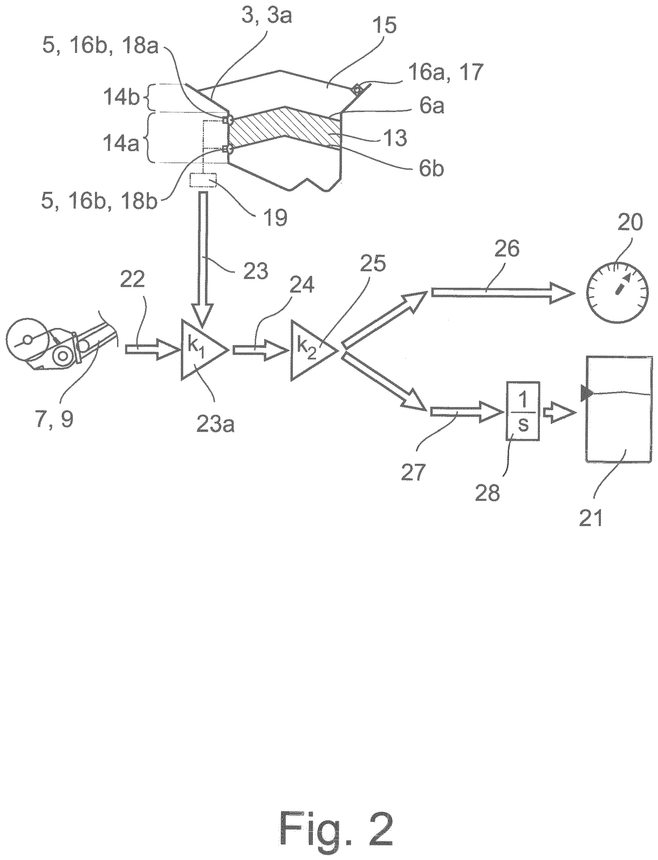

Diese Kalibrierung ist dann besonders einfach, wenn vorbekannt ist, welcher Differenz an Volumen von Erntegut im Behälter 3 der Unterschied zwischen dem oberen Füllstand 6a und dem unteren Füllstand 6b entspricht. Vorzugsweise basiert demnach das Kalibrieren der Gutstromsensoranordnung 8 auf einem Differenzvolumen 13 - in der Fig. 2 eingetragen-, welches bezüglich des oberen Füllstands 6a und des unteren Füllstands 6b definiert ist.

Neben dem Unterschied an Volumen kann für die Kalibrierung auch bedeutsam sein, in welchem Zeitabstand jeweils der obere Füllstand 6a und der untere Füllstand 6b erfasst wurden. Bevorzugt ist daher, dass das Kalibrieren der Gutstromsensoranordnung 8 auf einer Zeitdifferenz zwischen einem Erfassen des oberen Füllstands 6a und einem Erfassen des unteren Füllstands 6b basiert. Weiter ist es bevorzugt, dass das Kalibrieren auf einem Quotienten zwischen dem Differenzvolumen 13 und der Zeitdifferenz basiert. Je nachdem, ob das Differenzvolumen 13 einer Befüllung oder einer Entleerung des Behälters 3 entspricht, kann durch einen solchen Quotienten der - jedenfalls durchschnittliche - Volumenstrom an Erntegut bei der Befüllung oder Entleerung bestimmt werden. Auf diese Weise kann die Befüllstromsensorvorrichtung 10 bzw. die Entleerstromsensorvorrichtung 12 anhand ihrer jeweiligen Rohdaten kalibriert werden, sodass diesen reinen Rohdaten Volumenwerte bzw. Volumenstromwerte zugeordnet werden können.

Regelmäßig weist ein solcher Behälter 3 einer Erntemaschine 1 eine Geometrie auf, deren Querschnitt sich in Abhängigkeit der Füllstandshöhe im Behälter 3 verändert. Besonders einfach ist die Bestimmung eines solchen Differenzvolumens 13, wenn bei dem Differenzvolumen 13 keine Veränderung dieses Querschnitts vorliegt. Daher sieht die Erfindung vor, dass der Behälter 3 einen linearen Füllstandbereich 14a und einen nichtlinearen Füllstandbereich 14b aufweist, wobei sich in dem linearen Füllstandbereich 14a das Füllstandvolumen linear mit einer Füllstandhöhe ändert und wobei sich in dem nichtlinearen Füllstandbereich 14b das Füllstandvolumen nichtlinear mit der Füllstandhöhe ändert und wobei sich der obere Füllstand 6a und der untere Füllstand 6b in dem linearen Füllstandbereich 14a befinden. Dieser Sachverhalt ist auch in der Fig. 2 dargestellt.

Ebenso regelmäßig ist bei einem Behälter 3 einer Erntemaschine 1 eine Möglichkeit vorgesehen, eine maximale Befüllung des Behälters 3 zu erfassen. Obwohl also auf diese Weise mindestens ein Füllstand des Behälters 3 erfasst werden kann, ist dieser Füllstand regelmäßig für eine vorschlagsgemäße Kalibrierung weniger gut geeignet, weil die Erfassung häufig zu ungenau ist. Daher ist es bevorzugt, dass dem Behälter 3 ein Maximalfüllstandvolumen 15 zugeordnet ist und dass der obere Füllstand 6a einem Oberfüllstandvolumen entspricht, welches geringer als das Maximalfüllstandvolumen 15 ist. Das liegt auch daran, dass sich regelmäßig das Maximalfüllstandvolumen 15 in dem nichtlinearen Füllstandbereich 14b befindet.

Vielmehr ist bezüglich des oberen Füllstands 6a bevorzugt, dass das Oberfüllstandvolumen mindestens 50 % des Maximalfüllstandvolumens und vorzugsweise zwischen 50 % und 70 % des Maximalfüllstandvolumens beträgt. Insbesondere kann das Oberfüllstandvolumen im Wesentlichen 60 % des Maximalfüllstandvolumens betragen.

Hinsichtlich des unteren Füllstands 6b ist es bevorzugt, dass der untere Füllstand 6b einem Unterfüllstandvolumen entspricht, welches weniger als 50 % des Maximalfüllstandvolumens 15 und vorzugsweise zwischen 30 % und 50 % des Maximalfüllstandvolumens 15 beträgt. Dieses Unterfüllstandvolumen kann auch im Wesentlichen 40 % des Maximalfüllstandvolumens 15 betragen.

Grundsätzlich kann die Erfassung durch die Füllstandsensoranordnung 5 auf beliebigem Wege, so etwa mechanisch oder optisch erfolgen. Speziell bei einer optischen Erfassung kann eine einzelne optische Erfassungsvorrichtung viele unterschiedliche Füllstände erfassen. Zur Erfassung dieser Füllstände ist speziell bevorzugt und entsprechend der Darstellung in der Fig. 2 vorgesehen, dass die Füllstandsensoranordnung 5 eine erste Teilsensoranordnung 16a zum Erfassen des Maximalfüllstands 15 und eine zweite Teilsensoranordnung 16b zum Erfassen des oberen Füllstands 6a und des unteren Füllstands 6b aufweist. Insoweit weist die Füllstandsensoranordnung 5 zwei Teilanordnungen auf, welche ihrerseits unterteilt sein können, wie untenstehend noch beschrieben wird. Wie dargestellt ist es bevorzugt, dass die erste Teilsensoranordnung 16a einen mechanisch betätigbaren Überlaufsensor 17 zum Erfassen eines potenziellen Überlaufs des Behälters 3 aufweist. Der Überlaufsensor 17 gibt also an, ab wann der Behälter 3 nicht mehr befüllt werden darf, wenn er nicht überlaufen soll.

Die Füllstandsensoranordnung 5 kann vorzugsweise dadurch weiter aufgeteilt sein, dass die Füllstandsensoranordnung 5 einen oberen mechanisch betätigbaren Sensor 18a an dem Behälter 3 zur Erfassung des oberen Füllstands 6a und einen unteren mechanisch betätigbaren Sensor 18b zur Erfassung des unteren Füllstands 6b aufweist. Vorzugsweise umfasst also die obige zweite Teilsensoranordnung 16b den oberen mechanisch betätigbaren Sensor 18a und den unteren mechanisch betätigbaren Sensor 18b.

Es kann aber - gemäß einer hier nicht dargestellten, aber ebenfalls vorschlagsgemäßen Variante - auch sein, dass die Füllstandsensoranordnung 5 und speziell die obige zweite Teilsensoranordnung 16b dazu eingerichtet ist, neben dem oberen Füllstand 6a und dem unteren Füllstand 6b weitere Füllstände in dem Behälter 3 zu erfassen. Dabei ist es besonders vorteilhaft, wenn sich diese weiteren Füllstände in dem linearen Füllstandbereich 14a befinden.

Ebenso braucht die Füllstandsensoranordnung 5 nicht auf die Erfassung diskreter Füllstandwerte eingeschränkt zu sein. Vielmehr sieht eine bevorzugte Variante - die hier ebenfalls nicht dargestellt ist - vor, dass die Füllstandsensoranordnung 5 dazu eingerichtet ist, einen Füllstand in einem zusammenhängenden Füllstandbereich zu erfassen. Es kann also in diesem Füllstandbereich ein kontinuierlicher Füllstand erfasst werden, statt nur einzelner diskreter Werte. Dabei ist es weiter bevorzugt, dass sich dieser Füllstandbereich im Wesentlichen in dem linearen Füllstandbereich 14a befindet.

Die obige Kalibrierung kann sich einerseits, wie beschrieben, auf eine Gutstromsensoranordnung 8 und speziell auf eine Befüllstromsensorvorrichtung 10 und/oder eine Entleerstromsensorvorrichtung 12 beziehen. Durch die Kalibrierung der Gutstromsensoranordnung 8 können aber jedenfalls mittelbar noch weitere Kalibrierungen erreicht werden. Dies wird untenstehend, auch mit Bezug auf die Fig. 2, beschrieben. Es ist hier bevorzugt vorgesehen, dass die landwirtschaftliche Erntemaschine 1 eine Anzeigevorrichtung 19 zur Bestimmung und vorzugsweise kontinuierlichen Anzeige eines aktuellen Füllstands 21 des Behälters 3 aufweist. Dieser aktuelle Füllstand 21 kann, wie in dem vorliegenden Beispiel, als Masse und speziell in Tonnen angegeben angezeigt werden. Die Anzeigevorrichtung 19 ist dabei als Vorrichtung zu verstehen, welche in diesem Ausführungsbeispiel vorzugsweise auch die für die Kalibrierung erforderlichen Berechnungen vornimmt. Die Anzeigevorrichtung 19 kann auch weitere Bedien-, Steuer- und Regelaufgaben beim Betrieb der Erntemaschine 1 übernehmen, auf die es hier aber im Einzelnen nicht ankommt. Neben dem aktuellen Füllstand 21 kann auch ein aktueller Ertrag 20, hier anzugeben als Masse pro Zeiteinheit und also Tonnen pro Stunde, angezeigt werden, wie ebenfalls in der Fig. 2 schematisch dargestellt ist.

Gemäß dieser bevorzugten Ausführungsform wird der aktuelle Füllstand 21 basierend auf einer Messung des Volumens des Erntegutstroms durch die Gutstromsensoranordnung 8 und einem von der Füllstandsensoranordnung 5 erfassten Füllstand bestimmt. Ebenso wird durch die Kalibrierung der Gutstromsensoranordnung 8 die Bestimmung des aktuellen Füllstands 21 durch die Anzeigevorrichtung 19 kalibriert. Denn wenn das Volumen des Erntegutstroms genau und die Gutstromsensoranordnung 8 entsprechend kalibriert ist, dann kann auch der aktuelle Füllstand 21 im Wesentlichen mit der entsprechenden Genauigkeit angegeben werden, wie nachstehend am Beispiel der Fig. 2 beschrieben wird. Hier wird lediglich die Zuführung des Befüllerntegutstroms durch eine Befüllvorrichtung 9 der Transportanordnung 7 betrachtet.

Speziell liefert die Befüllstromsensorvorrichtung 8 durch Messung an der Befüllvorrichtung 9 Rohdaten 22, welche dem Volumen des Befüllerntegutstroms entsprechen. Diese Rohdaten 22 werden in einer Umrecheneinheit 23a unter Verwendung von Kalibrierdaten 23, die gemäß einer vorschlagsgemäßen Kalibrierung der Gutstromsensoranordnung 8 ermittelt wurden und nun von der Anzeigevorrichtung 19 bereitgestellt werden, in Volumenstromdaten 24 umgewandelt, welche den Volumenstrom des Befüllerntegutstroms in Liter pro Stunde angeben. In einer Masseumrecheneinheit 25 werden diese Volumenstromdaten 24 in einen Ertragsdurchsatz 26 - dann angezeigt als aktueller Ertrag 20 - und einen Korntankdurchsatz 27 umgerechnet, welche beide jeweils in Tonnen pro Stunden angeben werden. Ertragsdurchsatz 26 und Korntankdurchsatz 27 können identisch sein, können sich aber auch durch Korrekturfaktoren o.dgl. unterscheiden, wobei es hier auf die Einzelheiten nicht ankommt.

Für den aktuellen Füllstand 21 ist dann bevorzugt vorgesehen, dass die Bestimmung des aktuellen Füllstands 21 auf einer erfolgten Erfassung des oberen Füllstands 6a und/oder des unteren Füllstands 6b und einer der erfolgten Erfassung folgenden Summierung eines von der Gutstromsensoranordnung 8 gemessenen Volumens des Erntegutstroms basiert. Es wird also z. B. von dem - vorbekannten - unteren Füllstand 6b bzw. dem entsprechenden Unterfüllstandvolumen, umgerechnet in eine Masse, ausgegangen, und das zugeführte Volumen des Befüllerntegutstroms, welches dank der vorschlagsgemäßen Kalibrierung hinreichend genau erfasst werden kann, nach Umrechnung in die entsprechende Masse hinzuaddiert. Auf diese Weise ist eine insbesondere kontinuierliche Anzeige des aktuellen Füllstands 21 möglich, welche genau gemäß der vorschlagsgemäßen Kalibrierung ist. Dabei kann die besagte Summierung auch speziell als Integration 28, wie in der Fig. 2 angedeutet und vorliegend im mathematischen Sinne zu verstehen, durchgeführt werden.

### Bezugszeichenliste

- 1: Erntemaschine
- 2: Mähdrescher
- 3: Behälter
- 3a: Korntank
- 4: Erntegut
- 5: Füllstandsensoranordnung
- 6a: oberer Füllstand
- 6b: unterer Füllstand
- 7: Transportanordnung
- 8: Gutstromsensoranordnung
- 9: Befüllvorrichtung
- 10: Befüllstromsensorvorrichtung
- 11: Entleervorrichtung
- 12: Entleerstromsensorvorrichtung
- 13: Differenzvolumen
- 14a: linearer Füllstandbereich
- 14b: nichtlinearer Füllstandbereich
- 15: Maximalfüllstandvolumen
- 16a: erste Teilsensoranordnung
- 16b: zweite Teilsensoranordnung
- 17: Überlaufsensor
- 18a: oberer mechanisch betätigbarer Sensor
- 18b: unterer mechanisch betätigbarer Sensor
- 19: Anzeigevorrichtung
- 20: aktueller Ertrag
- 21: aktueller Füllstand
- 22: Rohdaten
- 23a: Umrecheneinheit
- 23: Kalibrierdaten
- 24: Volumenstromdaten
- 25: Masseumrecheneinheit
- 26: Ertragsdurchsatz
- 27: Korntankdurchsatz
- 28: Integration

## Patentansprüche

1. Verfahren zur Kalibrierung bei einer landwirtschaftlichen Erntemaschine (1), wobei die Erntemaschine (1) einen Behälter (3) zur Aufnahme von Erntegut (4), eine Füllstandsensoranordnung (5) zum Erfassen eines oberen Füllstands (6a) und eines unteren Füllstand (6b) in dem Behälter (3), eine Transportanordnung (7) zum Führen eines dem Behälter (3) zugeordneten Erntegutstroms und eine Gutstromsensoranordnung (8) zum Messen eines Volumens des Erntegutstroms aufweist, wobei die Gutstromsensoranordnung (8) basierend auf der Erfassung des oberen Füllstands (6a) und des unteren Füllstands (6b) kalibriert wird, **dadurch gekennzeichnet, dass** der Behälter (3) einen linearen Füllstandbereich (14a) und einen nichtlinearen Füllstandbereich (14b) aufweist, wobei sich in dem linearen Füllstandbereich (14a) das Füllstandvolumen linear mit einer Füllstandhöhe ändert und wobei sich in dem nichtlinearen Füllstandbereich (14b) das Füllstandvolumen nichtlinear mit der Füllstandhöhe ändert und wobei sich der obere Füllstand (6a) und der untere Füllstand (6b) in dem linearen Füllstandbereich (14a) befinden.

2. Verfahren nach Anspruch 1, **dadurch gekennzeichnet, dass** die Transportanordnung (7) eine Befüllvorrichtung (9) zum Zuführen eines Befüllerntegutstroms in den Behälter (3) umfasst und dass die Gutstromsensoranordnung (8) eine Befüllstromsensorvorrichtung (10) zum Messen eines Volumens des Befüllerntegutstroms umfasst, vorzugsweise, dass die Befüllstromsensorvorrichtung (10) basierend auf der Erfassung des oberen Füllstands (6a) und des unteren Füllstands (6b) kalibriert wird.

3. Verfahren nach Anspruch 1 oder 2, **dadurch gekennzeichnet, dass** die Transportanordnung (7) eine Entleervorrichtung (11) zum Abführen eines Entleererntegutstroms aus dem Behälter (3) umfasst und dass die Gutstromsensoranordnung (8) eine Entleerstromsensorvorrichtung (12) zum Messen eines Volumens des Entleererntegutstroms umfasst, vorzugsweise, dass die Entleerstromsensorvorrichtung (12) basierend auf der Erfassung des oberen Füllstands (6a) und des unteren Füllstands (6b) kalibriert wird.

4. Verfahren nach einem der Ansprüche 1 bis 3, **dadurch gekennzeichnet, dass** das Kalibrieren der Gutstromsensoranordnung (8) auf einem Differenzvolumen (13) basiert, welches bezüglich des oberen Füllstands (6a) und des unteren Füllstands (6b) definiert ist.

5. Verfahren nach einem der Ansprüche 1 bis 4, **dadurch gekennzeichnet, dass** das Kalibrieren der Gutstromsensoranordnung (8) auf einer Zeitdifferenz zwischen einem Erfassen des oberen Füllstands (6a) und einem Erfassen des unteren Füllstands (6b) basiert, vorzugsweise, dass das Kalibrieren auf einem Quotienten zwischen dem Differenzvolumen (13) und der Zeitdifferenz basiert.

6. Verfahren nach einem der Ansprüche 1 bis 5, **dadurch gekennzeichnet, dass** dem Behälter (3) ein Maximalfüllstandvolumen (15) zugeordnet ist und dass der obere Füllstand (6a) einem Oberfüllstandvolumen entspricht, welches geringer als das Maximalfüllstandvolumen (15) ist, vorzugsweise, dass sich das Maximalfüllstandvolumen (15) in dem nichtlinearen Füllstandbereich (14b) befindet.

7. Verfahren nach Anspruch 6, **dadurch gekennzeichnet, dass** das Oberfüllstandvolumen mindestens 50 % des Maximalfüllstandvolumens (15), vorzugsweise zwischen 50 % und 70 % des Maximalfüllstandvolumens (15), insbesondere im Wesentlichen 60 % des Maximalfüllstandvolumens (15) beträgt.

8. Verfahren nach Anspruch 6 oder 7, **dadurch gekennzeichnet, dass** der untere Füllstand (6b) einem Unterfüllstandvolumen entspricht, welches weniger als 50 % des Maximalfüllstandvolumens (15), vorzugsweise zwischen 30 % und 50 % des Maximalfüllstandvolumens (15), insbesondere im Wesentlichen 40 % des Maximalfüllstandvolumens (15) beträgt.

9. Verfahren nach einem der Ansprüche 6 bis 8, **dadurch gekennzeichnet, dass** die Füllstandsensoranordnung (5) eine erste Teilsensoranordnung (16a) zum Erfassen des Maximalfüllstands (15) und eine zweite Teilsensoranordnung (16b) zum Erfassen des oberen Füllstands (6a) und des unteren Füllstands (6b) aufweist, vorzugsweise, wobei die erste Teilsensoranordnung (16a) einen mechanisch betätigbaren Überlaufsensor (17) zum Erfassen eines potenziellen Überlaufs des Behälters (3) aufweist.

10. Verfahren nach einem der Ansprüche 1 bis 9, **dadurch gekennzeichnet, dass** die Füllstandsensoranordnung (5) einen oberen mechanisch betätigbaren Sensor (18a) an dem Behälter (3) zur Erfassung des oberen Füllstands (6a) und einen unteren mechanisch betätigbaren Sensor (18b) zur Erfassung des unteren Füllstands (6b) aufweist.

11. Verfahren nach einem der Ansprüche 1 bis 10, **dadurch gekennzeichnet, dass** die Füllstandsensoranordnung (5), vorzugsweise die zweite Teilsensoranordnung (16b), dazu eingerichtet ist, neben dem oberen Füllstand (6a) und dem unteren Füllstand (6b) weitere Füllstände in dem Behälter (3) zu erfassen, vorzugsweise, wobei sich die weiteren Füllstände in dem linearen Füllstandbereich (14a) befinden.

12. Verfahren nach Anspruch 11, **dadurch gekennzeichnet, dass** die Füllstandsensoranordnung dazu eingerichtet ist, einen Füllstand in einem zusammenhängenden Füllstandbereich zu erfassen, vorzugsweise, dass sich der Füllstandbereich im Wesentlichen in dem linearen Füllstandbereich (14a) befindet.

13. Verfahren nach einem der Ansprüche 1 bis 12, **dadurch gekennzeichnet, dass** die landwirtschaftliche Erntemaschine (1) eine Anzeigevorrichtung (19) zur Bestimmung und vorzugsweise kontinuierlichen Anzeige eines aktuellen Füllstands (21) des Behälters (3) aufweist, dass der aktuelle Füllstand (21) basierend auf einer Messung des Volumens des Erntegutstroms durch die Gutstromsensoranordnung (8) und einem von der Füllstandsensoranordnung (5) erfassten Füllstand bestimmt wird und dass durch die Kalibrierung der Gutstromsensoranordnung (8) die Bestimmung des aktuellen Füllstands (21) durch die Anzeigevorrichtung (19) kalibriert wird.

14. Verfahren nach Anspruch 13, **dadurch gekennzeichnet, dass** die Bestimmung des aktuellen Füllstands (21) auf einer erfolgten Erfassung des oberen Füllstands (6a) und/oder des unteren Füllstands (6b) und einer der erfolgten Erfassung folgenden Summierung, vorzugsweise Integration (28), eines von der Gutstromsensoranordnung (8) gemessenen Volumens des Erntegutstroms basiert.

## Claims

1. A method for calibration in an agricultural harvesting machine (1), wherein the harvesting machine (1) has a container (3) for accommodating crop (4), a fill level sensor assembly (5) for the detection of an upper fill level (6a) and a lower fill level (6b) in the container (3), a transport assembly (7) for conveying a flow of crop associated with the container (3) and a crop flow sensor assembly (8) for measuring a volume of the crop flow, wherein the crop flow sensor assembly (8) is calibrated on the basis of the detection of the upper fill level (6a) and of the lower fill level (6b), **characterized in that** the container (3) has a linear fill level region (14a) and a non-linear fill level region (14b), wherein in the linear fill level region (14a), the fill level volume varies linearly with a fill level height and wherein in the non-linear fill level region (14b), the fill level volume varies non-linearly with the fill level height and wherein the upper fill level (6a) and the lower fill level (6b) are located in the linear fill level region (14a).

2. The method according to claim 1, **characterized in that** the transport assembly (7) comprises a filling device (9) for feeding a filling crop flow into the container (3) and **in that** the crop flow sensor assembly (8) comprises a filling flow sensor device (10) for measuring a volume of the filling crop flow, preferably **in that** the filling flow sensor device (10) is calibrated on the basis of the detection of the upper fill level (6a) and the lower fill level (6b).

3. The method according to claim 1 or claim 2, **characterized in that** the transport assembly (7) comprises an emptying device (11) for discharging an emptying crop flow from the container (3) and **in that** the crop flow sensor assembly (8) comprises an emptying flow sensor device (12) for measuring a volume of the emptying crop flow, preferably **in that** the emptying flow sensor device (12) is calibrated on the basis of the detection of the upper fill level (6a) and of the lower fill level (6b).

4. The method according to one of claims 1 to 3, **characterized in that** the calibration of the crop flow sensor assembly (8) is based on a volume difference (13) which is defined with respect to the upper fill level (6a) and the lower fill level (6b).

5. The method according to one of claims 1 to 4, **characterized in that** the calibration of the crop flow sensor assembly (8) is based on a time difference between a detection of the upper fill level (6a) and a detection of the lower fill level (6b), preferably **in that** the calibration is based on a quotient between the volume difference (13) and the time difference.

6. The method according to one of claims 1 to 5, **characterized in that** a maximum fill level volume (15) is associated with the container (3) and **in that** the upper fill level (6a) corresponds to an upper fill level volume which is smaller than the maximum fill level volume (15), preferably **in that** the maximum fill level volume (15) is located in the non-linear fill level region (14b).

7. The method according to claim 6, **characterized in that** the upper fill level volume is at least 50% of the maximum fill level volume (15), preferably between 50% and 70% of the maximum fill level volume (15), in particular substantially 60% of the maximum fill level volume (15).

8. The method according to claim 6 or claim 7, **characterized in that** the lower fill level (6b) corresponds to a lower fill level volume which is less than 50% of the maximum fill level volume (15), preferably between 30% and 50% of the maximum fill level volume (15), in particular substantially 40% of the maximum fill level volume (15).

9. The method according to one of claims 6 to 8, **characterized in that** the fill level sensor assembly (5) has a first part sensor assembly (16a) for the detection of the maximum fill level (15) and a second part sensor assembly (16b) for the detection of the upper fill level (6a) and the lower fill level (6b), preferably wherein the first part sensor assembly (16a) has a mechanically actuatable overflow sensor (17) for the detection of a potential overflow of the container (3).

10. The method according to one of claims 1 to 9, **characterized in that** the fill level sensor assembly (5) has an upper mechanically actuatable sensor (18a) on the container (3) in order to detect the upper fill level (6a) and a lower mechanically actuatable sensor (18b) for the detection of the lower fill level (6b).

11. The method according to one of claims 1 to 10, **characterized in that** the fill level sensor assembly (5), preferably the second part sensor assembly (16b), is configured to detect further fill levels in the container (3) in addition to the upper fill level (6a) and the lower fill level (6b), preferably wherein the further fill levels are located in the linear fill level region (14a).

12. The method according to claim 11, **characterized in that** the fill level sensor assembly is configured to detect a fill level in a contiguous fill level region, preferably **in that** the fill level region is substantially located in the linear fill level region (14a).

13. The method according to one of claims 1 to 12, **characterized in that** the agricultural harvesting machine (1) has a display device (19) for determining and preferably for continuously displaying a current fill level (21) of the container (3), **in that** the current fill level (21) is determined on the basis of a measurement of the volume of the crop flow through the crop flow sensor assembly (8) and a fill level detected by the fill level sensor assembly (5) and **in that** by calibrating the crop flow sensor assembly (8), the determination of the current fill level (21) is calibrated by means of the display device (19).

14. The method according to claim 13, **characterized in that** the determination of the current fill level (21) is based on a successful detection of the upper fill level (6a) and/or of the lower fill level (6b) and a summation which follows the successful detection, preferably integration (28), of a volume of the crop flow measured by the crop flow sensor assembly (8).

## Revendications

1. Procédé d'étalonnage dans une machine agricole de récolte (1), la machine de récolte (1) comportant un contenant (3) pour recevoir du produit récolté (4), un agencement de capteur de niveau de remplissage (5) pour détecter un niveau de remplissage supérieur (6a) et un niveau de remplissage inférieur (6b) dans un contenant (3), un agencement de transport (7) pour amener un flux de produit récolté associé au contenant (3) et un agencement de capteur de flux de produit (8) pour mesurer un volume du flux de produit récolté, l'agencement de capteur de flux de produit (8) étant étalonné sur la base de la détection du niveau de remplissage supérieur (6a) et du niveau de remplissage inférieur (6b), **caractérisé en ce que** le contenant (3) comporte une plage de remplissage linéaire (14a) et une plage de remplissage non linéaire (14b), dans la plage de remplissage linéaire (14a) le volume de remplissage variant linéairement avec une hauteur de remplissage, et dans la plage de remplissage non linéaire (14b), le volume de remplissage variant non linéairement avec la hauteur de remplissage, et le niveau de remplissage supérieur (6a) et le niveau de remplissage inférieur (6b) se trouvant dans la plage de remplissage linéaire (14a).

2. Procédé selon la revendication 1, **caractérisé en ce que** l'agencement de transport (7) comprend un dispositif de remplissage (9) pour amener un flux de remplissage de produit récolté dans le contenant (3), et **en ce que** l'agencement de capteur de flux de produit (8) comprend un dispositif de capteur de flux de remplissage (10) pour mesurer un volume du flux de remplissage de produit récolté, de préférence **en ce que** le dispositif de capteur de flux de remplissage (10) est étalonné sur la base de la détection du niveau de remplissage supérieur (6a) et du niveau de remplissage inférieur (6b).

3. Procédé selon la revendication 1 ou 2, **caractérisé en ce que** l'agencement de transport (7) comprend un dispositif de vidage (11) pour évacuer le flux de vidage de produit récolté hors du contenant (3), et **en ce que** l'agencement de capteur de flux de produit (8) comprend un dispositif de capteur de flux de vidage (12) pour mesurer un volume du flux de vidage de produit récolté, de préférence **en ce que** le dispositif de capteur de flux de vidage (12) est étalonné sur la base de la détection du niveau de remplissage supérieur (6a) et du niveau de remplissage inférieur (6b).

4. Procédé selon une des revendications 1 à 3, **caractérisé en ce que** l'étalonnage de l'agencement de capteur de flux de produit (8) est basé sur un volume différentiel (13) qui est défini par rapport au niveau de remplissage supérieur (6a) et au niveau de remplissage inférieur (6b).

5. Procédé selon une des revendications 1 à 4, **caractérisé en ce que** l'étalonnage de l'agencement de capteur de flux de produit (8) est basé sur une différence temporelle entre une détection du niveau de remplissage supérieur (6a) et une détection du niveau de remplissage inférieur (6b), de préférence **en ce que** l'étalonnage est basé sur un quotient entre le volume différentiel (13) et la différence temporelle.

6. Procédé selon une des revendications 1 à 5, **caractérisé en ce qu'**au contenant (3) est associé un volume de remplissage maximal (15), et **en ce que** le niveau de remplissage supérieur (6a) correspond à un volume de remplissage supérieur qui est inférieur au volume de remplissage maximal (15), de préférence **en ce que** le volume de remplissage maximal (15) se trouve ans la plage de remplissage non linéaire (14b).

7. Procédé selon la revendication 6, **caractérisé en ce que** le volume de remplissage supérieur correspond à au moins 50 % du volume de remplissage maximal (15), de préférence à entre 50 % et 70 % du volume de remplissage maximal (15), en particulier sensiblement à 60 % du volume de remplissage maximal (15).

8. Procédé selon la revendication 6 ou 7, **caractérisé en ce que** le niveau de remplissage inférieur (6b) correspond à un volume de remplissage inférieur qui correspond à moins de 50 % du volume de remplissage maximal (15), de préférence à entre 30 % et 50 % du volume de remplissage maximal (15), en particulier à sensiblement 40 % du volume de remplissage maximal (15).

9. Procédé selon une des revendications 6 à 8, **caractérisé en ce que** l'agencement de capteur de niveau de remplissage (5) comporte un premier agencement de capteur partiel (16a) pour détecter le niveau de remplissage maximal (15) et un second agencement de capteur partiel (16b) pour détecter le niveau de remplissage supérieur (6a) et le niveau de remplissage inférieur (6b), de préférence, le premier agencement de capteur partiel (16a) comportant un capteur de débordement à commande mécanique (17) pour détecter un débordement potentiel du contenant (3).

10. Procédé selon une des revendications 1 à 9, **caractérisé en ce que** l'agencement de capteur de niveau de remplissage (5) comporte un capteur supérieur à actionnement mécanique (18a) sur le contenant (3) pour détecter le niveau de remplissage supérieur (6a) et un capteur inférieur à actionnement mécanique (18b) pour détecter le niveau de remplissage inférieur (6b).

11. Procédé selon une des revendications 1 à 10, **caractérisé en ce que** l'agencement de capteur de niveau de remplissage (5), de préférence le second agencement de capteur partiel (16b), est agencé pour détecter, outre le niveau de remplissage supérieur (6a) et le niveau de remplissage inférieur (6b), d'autres niveaux de remplissage dans le contenant (3), de préférence les autres niveaux de remplissage se trouvant dans la plage de remplissage linéaire.

12. Procédé selon la revendication 11, **caractérisé en ce que** l'agencement de capteur de niveau de remplissage est agencé pour détecter un niveau de remplissage dans une plage de remplissage continue, de préférence **en ce que** la plage de remplissage se trouve sensiblement dans la plage de remplissage linéaire (14a).

13. Procédé selon une des revendications 1 à 12, **caractérisé en ce que** la machine agricole de récolte (1) comporte un dispositif d'affichage (19) pour la détermination et l'affichage de préférence continu d'un niveau de remplissage instantané (21) du contenant (3), **en ce que** le niveau de remplissage instantané (21) est déterminé sur la base d'une mesure du volume du flux de produit récolté par l'agencement de capteur de flux de produit (8) et sur un niveau de remplissage détecté par l'agencement de capteur de niveau de remplissage (5), et **en ce que**, du fait de l'étalonnage de l'agencement de capteur de flux de produit (8), la détermination du niveau de remplissage instantané (21) est étalonnée par l'intermédiaire du dispositif d'affichage (19).

14. Procédé selon la revendication 13, **caractérisé en ce que** la détermination du niveau de remplissage instantané (21) est basée sur une détection effectuée du niveau de remplissage supérieur (6a) et/ou du niveau de remplissage inférieur (6b) et sur une sommation, de préférence intégration (28), consécutive à la détection effectuée, d'un volume du flux de produit récolté mesuré par l'agencement de capteur de flux de produit (8).
